# EUROPÄISCHE PATENTANMELDUNG

(11) **EP 0 675 305 A1**
(43) Veröffentlichungstag der Anmeldung: **04.10.1995**
(21) Anmeldenummer: 95250080.9
(22) Anmeldetag: 30.03.1995
(51) Int. Cl.: F16K 5/20

(54) **Kugelhahn**

(30) Priorität: 30.03.1994 DE 4411050
(71) Anmelder: Bruchhold, Ingo, Dr., D-10585 Berlin (DE)
(72) Erfinder: Bruchhold, Ingo, Dr., D-10585 Berlin (DE)

(57) **Zusammenfassung**

Das Kugelküken (4) eines Kugelhahnes ist in einem Gehäuse (1) schwimmend gelagert, gegenüber diesem über Sitzringe (9,10) abgedichtet und über ein kardanisches Glied (21,22,23) mit einem Antriebszapfen (6) verbunden. Der auf der Abströmseite eines den Kugelhahn durchströmenden Mediums angeordnete Sitzring (9) ist fixiert, während der Sitzring (10) auf der Anströmseite schwimmend angeordnet und axial nachgiebig in dem Gehäuse (1) abgestützt ist. Auf der Abströmseite ist weiterhin ein gegen das Kugelküken (4) oder den Antriebszapfen (6) anstellbares Element (17,19,20) angeordnet.

## Beschreibung

Die Erfindung betrifft einen Kugelhahn mit den Merkmalen des Oberbegriffes des Patentanspruches 1.

Bei derartigen Kugelhähnen wird die Abdichtung zwischen dem Kugelküken und dem Gehäuse dadurch realisiert, daß entweder ein schwimmendes Kugelküken mit fixierten oder schwimmenden Sitzringen oder daß ein fixiertes Kugelküken mit fixierten oder schwimmenden Sitzringen zusammenwirkt. Die Anfangsdichtung bei einem Betriebsdruck von 0 bar wird im Falle der schwimmenden Sitzringe entweder über Federelemente oder Hydrauliksysteme erreicht, die in dem Sitzringsystem angeordnet sind.

Jede der genannten Dichtungsvarianten weist spezifische Nachteile auf. Bei hohen Temperaturen und bei einem hohen Feststoffgehalt des Fördermediums muß für die Abdichtung zwischen dem Kugelküken und dem Gehäuse eine Hartstoffdichtung eingesetzt werden. Dies erfordert eine hohe Flächenpressung, die zusammen mit dem hohen Reibwert der Hartstoffdichtung ein großes Drehmoment zum Schalten des Kugelkükens notwendig macht. Die hohe Flächenpressung bei diesen Hartstoffdichtungen führt außerdem zu einem schnellen Verschleiß der Dichtelemente. Kugelhähne mit einem schwimmenden Kugelküken stellen zwar ein effektives Dichtsystem dar, sind aber für große Nennweiten nicht mehr anwendbar. In diesem Fall wird die Flächenpressung auf das druckabgewandte Dichtsystem, das gleichzeitig als Lager dient, durch den auf die Kükenoberfläche wirkenden Mediumdruck so groß, daß ein Schalten des Kugelkükens nicht mehr möglich ist. Um für Kugelhähne mit einem fixierten Kugelküken und schwimmenden Sitzringen, die über eine Hartstoffdichtung abgedichtet sind, die notwendige Flächenpressung zu erreichen, ist eine Integration hydraulischer Systeme in den Sitzringbereich erforderlich. Eine derartige Anordnung ist aufwendig.

Der Erfindung liegt die Aufgabe zugrunde, das Dichtsystem für einen gattungsgemäßen Kugelhahn derart auszubilden, daß es auch bei großen Nennweiten effektiv ist und ein nur geringes Schaltmoment erfordert.

Diese Aufgabe wird bei einem gattungsgemäßen Kugelhahn erfindungsgemäß durch die kennzeichnenden Merkmale des Patentanspruches 1 gelöst. Vorteilhafte Ausgestaltungen der Erfindung sind Gegenstand der Unteransprüche.

Durch die erfindungsgemäße Anordnung werden auf der Abströmseite während des Schaltvorganges die Dichtfunktion, die einen hohen Reibwert erfordert, und die Lagerfunktion, die einen geringen Reibwert erfordert, voneinander getrennt und unterschiedlichen Bauteilen übertragen. Diese Bauteile sind die besonders angeordneten Sitzringe und das bei Einleitung des Schaltvorganges anstellbare Element. Auf diese Weise wird es möglich, das schwimmende Kugelküken auch bei Kugelhähnen großer Nennweiten einzusetzen. Die erfindungsgemäßen Kugelhähne sind auch für den Einsatz bei hohen Temperaturen geeignet, da Hartstoffdichtungen verwendet werden können, so daß in der unmittelbaren Umgebung des Durchganges des Fördermediums auf die Verwendung von Weichdichtungen verzichtet werden kann. Der Verschleiß der Dichtelemente wird erheblich reduziert, da diese beim Schaltvorgang nur durch eine geringe Reibung beansprucht werden. Diese Minimierung des Reibwertes während des Schaltens bewirkt eine Reduzierung des notwendigen Schaltmomentes, insbesondere dann, wenn während des Anfahrens der volle Differenzdruck ansteht. Durch die Fixierung des Sitzringes auf der Abströmseite nach kompletter Montage des Kugelhahnes können fertigungsbedingte Maß- und Lagetoleranzen ausgeglichen werden. Das kardanische Glied sorgt für eine winkeltreue Übertragung zwischen dem Kugelküken und dem Antriebszapfen, die über das anstellbare Element in axialer Richtung relativ verstellbar zueinander sind.

Mehrere Ausführungsbeispiele der Erfindung sind in der Zeichnung dargestellt und werden im folgenden näher erläutert. Es zeigen
- Fig. 1: einen Längsschnitt durch einen Kugelhahn und
- Fig. 2: einen Längsschnitt durch einen Kugelhahn gemäß einer anderen Ausführungsform.

Der dargestellte Kugelhahn enthält ein Gehäuse 1, das aus zwei Hälften besteht, die miteinander durch eine Schweißnaht 2 verbunden sind. Jede Gehäusehälfte ist mit einem Anschlußflansch 3 versehen. Anstelle dieser vollständig verschweißten Bauform können auch andere Bauformen verwendet werden, z. B. ein Gehäuse aus miteinander verschraubten Gehäusehälften oder ein von oben zugängliches, durch einen Deckel verschlossenes Gehäuse.

In dem Gehäuse 1 ist schwimmend ein Kugelküken 4 gelagert. Das Kugelküken 4 ist mit einer Durchgangsbohrung 5 versehen, deren Längsachse mit den Bohrungen in den Anschlußflanschen 3 fluchtet. Mit dem Kugelküken 4 ist ein Antriebszapfen 6 verbunden, der durch eine Öffnung im oberen Teil aus dem Gehäuse 1 herausgeführt und in einem auf das Gehäuse 1 geschweißten Stutzen 7 über eine Stopfbuchse abgedichtet ist. Die Stopfbuchse wird über eine Stopfbuchsbrille 8 angedrückt.

Der Kugelhahn wird in eine nicht gezeigte Rohrleitung eingesetzt. Es sei angenommen, daß das Fördermedium mit einem Betriebsdruck von P₃ an der Seite des in der Zeichnung rechts dargestellten Anschlußflansches ansteht (Anströmseite). Der in der Zeichnung links dargestellte Anschlußflansch stellt die Abströmseite dar, an der der Druck P₂ herrscht, der geringer ist als der Druck P₃.

Das Kugelküken 4 ist in dem Gehäuse 1 über zwei Sitzringe 9, 10 abgedichtet, die aus einem Hartstoff, z. B. aus Keramik, Metall oder Kunststoff bestehen. Der auf der druckabgewandten Seite, der Abströmseite angeordnete Sitzring 9 ist in dem Gehäuse 1 fixiert. Die Fixierung kann durch Kleben über eine Klebefuge 11 erfolgen, wenn alle übrigen innen liegenden Teile montiert sind. Der auf der druckzugewandten Seite, der Anströmseite vorhandene Sitzring 10 ist schwimmend angeordnet und in dem Gehäuse 1 axial verschiebbar. Er stützt sich nachgiebig über Federn 12 an dem Gehäuse 1 ab.

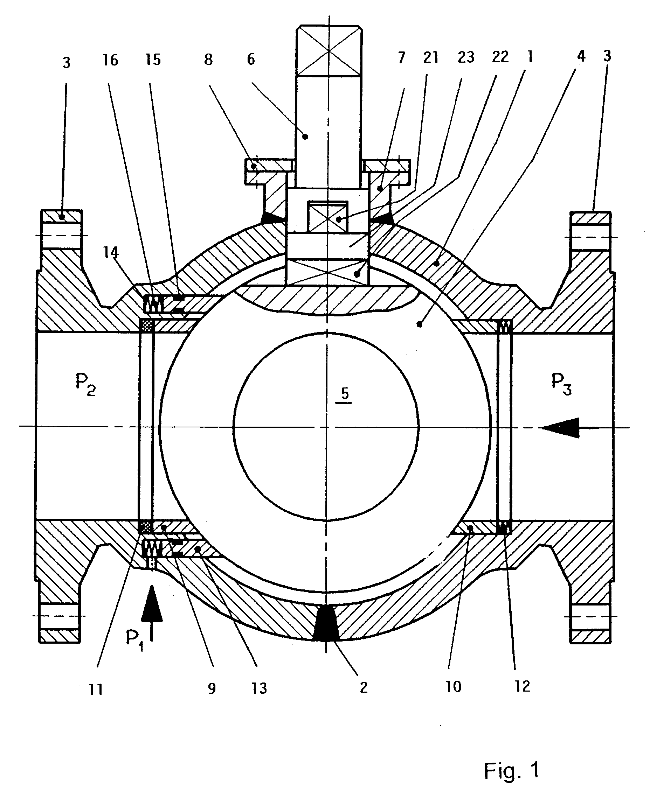

Bei dem in Fig.1 dargestellten Kugelhahn ist auf der Abströmseite konzentrisch zu dem fixierten Sitzring 9 und der Durchgangsbohrung 5 ein gegen das Kugelküken 4 anstellbarer Ring 13 vorgesehen. Dieser anstellbare Ring 13 ist in einer Ausnehmung 14 des Gehäuses 1 geführt und über O-Ringe 15 abgedichtet. Der Ring 13 stützt sich im Ruhezustand an dem Gehäuse 1 über eine Feder 16 ab, die an der dem Kugelküken 4 abgewandten Stirnfläche anliegt. In die den anstellbaren Ring 13 aufnehmende Ausnehmung 14 des Gehäuses 1 mündet eine Druckleitung hinein, über die ein flüssiges oder gasförmiges Druckmedium mit einem Druck P₁ in den hinter dem Ring 13 liegenden Teil der Ausnehmung 14 eingeführt wird.

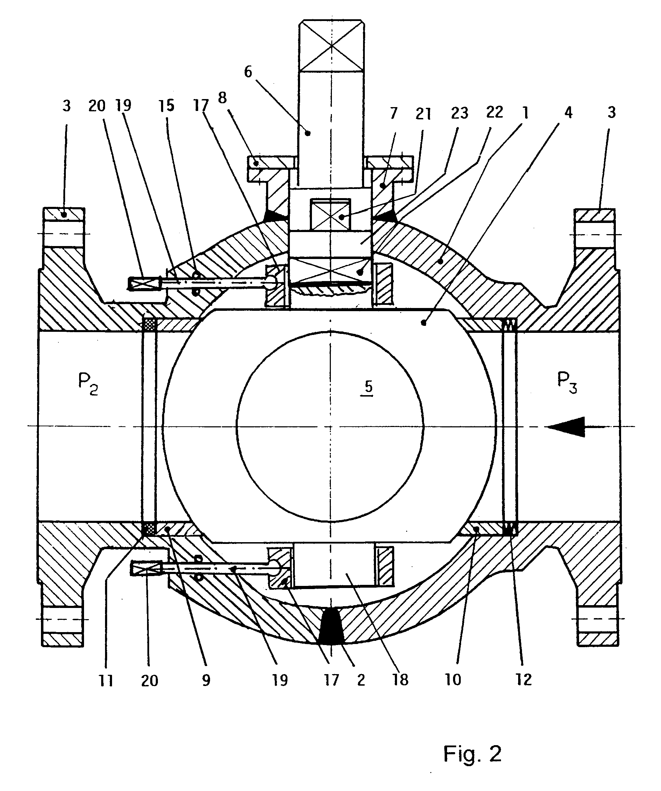

Gemäß Fig. 2 ist der anstellbare Ring 13 durch ein anderes anstellbares Element ersetzt. Dieses Element besteht aus einer Lagerschale 17 eines Gleit- oder Wälzlagers und umfaßt den Antriebszapfen 6. Eine gleichartige Lagerschale 17 umschließt einen Zapfen 18, der an dem Kugelküken 4 auf der dem Antriebszapfen 6 abgewandten Seite angebracht ist. Die Lagerschalen 17 sind in diesem Beispiel mechanisch anstellbar, wozu eine Spindel 19 dient. Die Spindel 19 greift an die Lagerschale 17 an, ist durch das Gehäuse 1 nach außen geführt und in dem Gehäuse 1 durch O-Ringe 15 abgedichtet. Die Spindel 19 endet in einem Vierkant 20, an den eine Verstellvorrichtung angreift. Die Spindel könnte analog durch einen Pneumatik- oder einen Hydraulikzylinder ersetzt werden.

Zwischen dem Kugelküken 4 und dem Antriebszapfen 6 ist ein kardanisches Glied vorgesehen. Das kardanische Glied ist als Kreuzgelenk ausgebildet und besteht aus je einer an dem Kugelküken 4 und an dem Antriebszapfen 6 befestigten Gabel 21, 22. Diese Gabeln 21, 22 sind um 90° gegeneinander verdreht und mit einem Kreuz 23 gelenkig verbunden.

Bei dem beschriebenen Kugelhahn ist eine Anfangsdichtung dadurch gegeben, daß der Sitzring 10 auf der Anströmseite über die Federn 12 so gegen das Kugelküken 4 gepreßt, daß das Kugelküken 4 an dem Sitzring 9 auf der Abströmseite zur Anlage kommt. Hierdurch ist das Kugelküken 4 in seiner Position fixiert. In der Geschlossenstellung des Kugelhahnes addiert sich zu der Federkraft des Sitzringes 10 der auf die Kükenoberfläche wirkende Betriebsdruck P₃, wodurch eine hohe Flächenpressung zwischen dem Kugelküken 4 und dem Sitzring 9 auf der Abströmseite erreicht wird. Soll jetzt das Kugelküken 4 geschaltet werden, so wird der anstellbare Ring 13 durch eine Beaufschlagung mit Druckmedium von dem Druck P₁ gegen das Kugelküken 4 oder die Lagerschale 17 mit Hilfe der Spindel 19 gegen den Antriebszapfen 6 gefahren. Das Kugelküken 4 oder der Antriebszapfen 6 stützen sich jetzt an dem anstellbaren Element ab.

## Patentansprüche

1. Kugelhahn mit einem Kugelküken (4), das mit einer Durchgangsbohrung (5) versehen, in einem Gehäuse (1) schwimmend gelagert, mit einem Antriebszapfen (6) verbunden und gegenüber dem Gehäuse (1) über Sitzringe (9, 10) abgedichtet ist, von denen einer auf der Anströmseite und der andere auf der Abströmseite eines den Kugelhahn durchströmenden Mediums an dem Kugelküken (4) anliegt, dadurch gekennzeichnet, daß der auf der Abströmseite angeordnete Sitzring (9) fixiert ist, daß der Sitzring (10) auf der Anströmseite schwimmend angeordnet und axial nachgiebig in dem Gehäuse (1) abgestützt ist, daß auf der Abströmseite ein gegen das Kugelküken (4) oder den Antriebszapfen (6) anstellbares Element angeordnet ist und daß das Kugelküken (4) über ein kardanisches Glied (21, 22, 23) mit dem Antriebszapfen (6) verbunden ist.

2. Kugelhahn nach Anspruch 1, dadurch gekennzeichnet, daß das anstellbare Element aus einem konzentrisch zur Durchgangsbohrung (5) des Kugelkükens (4) angeordneten, an dem Kugelküken (4) anliegenden Ring (13) besteht.

3. Kugelhahn nach Anspruch 1, dadurch gekennzeichnet, daß das anstellbare Element aus einer den Antriebszapfen (6) umfassenden Lagerschale (17) besteht.

4. Kugelhahn nach einem der Ansprüche 1 bis 3, dadurch gekennzeichnet, daß das Element über ein hydraulisches oder pneumatisches System von außen anstellbar ist.

5. Kugelhahn nach einem der Ansprüche 1 bis 3, dadurch gekennzeichnet, daß das Element mechanisch über eine Spindel (19) von außen anstellbar ist.

6. Kugelhahn nach einem der Ansprüche 1 bis 3, dadurch gekennzeichnet, daß das Element pneumatisch über eine an das Element angreifende Zylinderanordnung von außen anstellbar ist.

7. Kugelhahn nach einem der Ansprüche 1 bis 3, dadurch gekennzeichnet, daß das Element hydraulisch über eine an das Element angreifende Zylinderanordnung von außen anstellbar ist.
